# EUROPEAN PATENT SPECIFICATION

(11) **EP 1 826 026 B1**
(45) Date of publication and mention of the grant of the patent: **20.05.2009**
(21) Application number: 07250746.0
(22) Date of filing: 22.02.2007
(51) Int. Cl.: B60C 11/03, B60C 11/04

(54) **Pneumatic tire for motorcycle**
Luftreifen für ein Motorrad
Pneu pour motocyclette

(30) Priority: 23.02.2006 JP 2006046671
(43) Date of publication of application: 29.08.2007
(73) Proprietor: Bridgestone Corporation, Tokyo 104-8340 (JP)
(72) Inventor: Hirano, Tasaki, Kodaira-shi, Tokyo 187-8531 (JP)
(74) Representative: Whalley, Kevin

(56) References cited:
- EP-A1- 0 561 326
- JP-A- 61 036 002
- JP-A- 2001 039 120

## Description

### BACKGROUND OF THE INVENTION

### Field of the Invention

The present invention relates to a pneumatic tire for a motorcycle, especially suitable for a front tire of a racing motorcycle, having a tread portion provided with at least a pair of circumferential grooves extending generally in a circumferential direction of the tire and oppositely disposed with respect to an equatorial plane of the tire and a plurality of inclined grooves extending from an outer side to an inner side in a width direction on a grounding surface of the tread portion to be inclined with respect to the circumferential direction of the tire and ended within the grounding surface of the tread portion, and is directed to satisfy both of lightness of handling and stability during braking at a high level.

### Description of Related Art

Pneumatic tires for a motorcycle having such tread patterns are known from, for example, JP 2-28006A and JP 6-115316A. The tire disclosed in JP 2-28006A comprises circumferential grooves intermittently extending on a crown center of a tread portion and inclined grooves extending obliquely from one end of the circumferential grooves to a shoulder portion at an angle ranging from 40 to 60 degrees with respect to the crown center. In the tire disclosed in JP 6-115316A, three circumferential grooves are provided at a crown center and its both sides and inclined grooves are provided to extend across these circumferential grooves having a depth ranging from 70 to 100% of those of the inclined grooves.

### SUMMARY OF THE INVENTION

Although improvement of lightness of handling can be expected in a tire having inclined grooves at a tread portion, stability is insufficient when sudden force is applied to the tire, for example when the motorcycle brakes before entering a corner during a race. In general, in order to ensure stability of a tire, it is effective that, in the process of increasing a grounding surface of a tread portion with increasing an input force to the tire, stiffness of the tread portion in the width direction of the tire is reduced to moderate the behavior of the tire. However, in the tire disclosed in JP 2-28006A, although circumferential grooves continuing into the inclined grooves are provided in the central area of the tread portion to reduce stiffness of the tread portion in the width direction of the tire, stiffness of the tread portion in the width direction of the tire in the process of increasing the grounding surface of the tread portion remains the same and therefore, effect on improvement of stability can hardly be expected. In the tire described in JP 6-115316A, a total of three circumferential grooves are provided, one of which is provided in the central area of the tread portion and two of which are provided in both side areas of the tread portion, to reduce stiffness of the tread portion in the width direction of the tire even in the process of increasing the grounding surface of the tread portion. However, due to the circumferential groove provided in the central area of the tread portion, stiffness of the tread portion in the width direction of the tire is excessively reduced so as not to result in improvement of stability. That is to say, there are no conventional tread patterns capable of improving both of lightness of handling and stability during braking.

It is an object of the present invention to overcome the above-mentioned conventional problems and to provide a pneumatic tire for a motorcycle capable of improving both of lightness of handling and stability during braking by means of optimizing the pattern arrangement.

In order to achieve the above-mentioned object, the present invention is a pneumatic tire for a motorcycle having a tread portion provided with at least a pair of circumferential grooves extending generally in a circumferential direction of the tire and oppositely disposed with respect to an equatorial plane of the tire and a plurality of inclined grooves extending from an outer side to an inner side in a width direction on a grounding surface of the tread portion to be inclined with respect to the circumferential direction of the tire and ended within the grounding surface of the tread portion, wherein said circumferential grooves are disposed in the side areas when the tread portion is divided into a central area and two side areas located at both sides on the central area, the inclined grooves slanting in mutually opposite directions with respect to the circumferential direction of the tire are alternatively arranged along the circumferential direction of the tire, at least some of which extending across the equatorial plane of the tire, and at least a half of the inclined grooves extend across the equatorial plane of the tire.

The term "generally in a circumferential direction of the tire" as used herein means a direction with an angle of 0 to 10 degrees with respect to the circumferential direction of the tire. The term of "central area" of the tread portion means an area including the equatorial plane of the tire and preferably means an area having a width of 50% or less of a width along the contour of the grounding surface of the tread portion with the equatorial plane of the tire being as its center. The term "side areas" means areas located outside of the central area in the width direction of the tire and including tread grounding edges. The description "the inclined grooves slanting in mutually opposite directions with respect to the circumferential direction of the tire" means that acute angles formed by the circumferential direction and one group of the inclined grooves are located in the first and third quadrants, while acute angles formed by the circumferential direction and the other group of the inclined grooves are located in the second and forth quadrants, assuming that rectangular coordinates with a x-axis of the circumferential direction of the tire and a y-axis of the width direction of the tire are provided.

In addition, in the pneumatic tire for a motorcycle according to the present invention, it is preferable that the central area has a width of 10% of a width along the contour of the grounding surface of the tread portion with the equatorial plane of the tire being as its center, that one pair or two pairs of said circumferential grooves are provided, that the circumferential grooves are disposed in an area having a width of 30% of a width along the contour of the grounding surface of the tread portion with a tread grounding edge being as its center, and that said inclined grooves have linear or arched extending shapes.

Furthermore, it is preferable that the tire of the present invention is a directional tire of which a rotation direction is specified when mounted on a vehicle and that the inner edge of the inclined groove in the width direction of the tire enters the grounding surface of the tread portion in advance of the outer edge of the inclined groove in the width direction of the tire.

In addition, the tire of the present invention is preferably to be mounted on a front wheel of the motorcycle.

According to the present invention, it is possible to provide a pneumatic tire for a motorcycle capable of improving both lightness of handling and stability during braking by means of optimizing the pattern arrangement.

### BRIEF DESCRIPTION OF THE DRAWINGS

Fig. 1 is a sectional view in a width direction of a typical pneumatic tire for a motorcycle according to the present invention.
Fig. 2 is a partial development view showing a typical tread pattern of a tire of the present invention.
Fig. 3 is a partial development view showing another exemplary tread pattern of a tire of the present invention.
Fig. 4 is a partial development view showing another exemplary tread pattern of a tire of the present invention.
Fig. 5 is a partial development view showing a tread pattern of a tire of Conventional Example 1.
Fig. 6 is a partial development view showing a tread pattern of a tire of Conventional Example 2.
Fig. 7 is a partial development view showing a tread pattern of a tire of Conventional Example 3.

### DESCRIPTION OF THE PREFERRED EMBODIMENTS

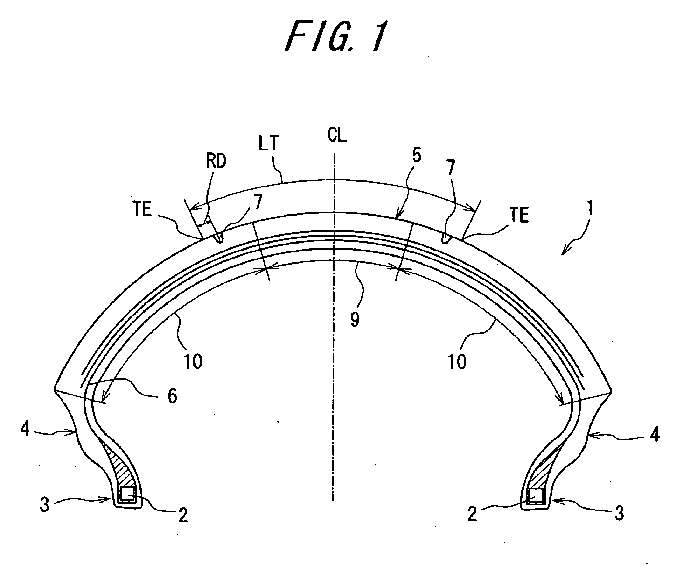

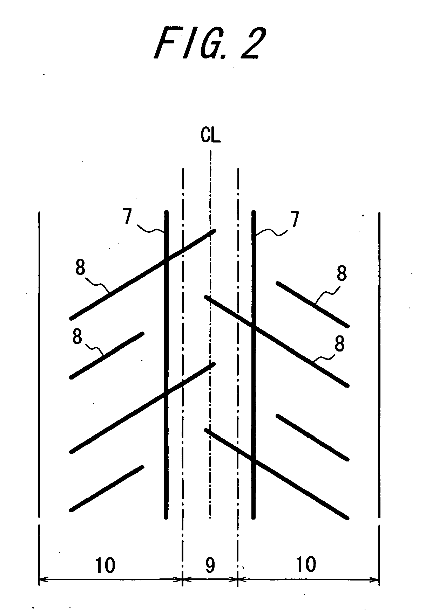

Next, embodiments of the present invention will be described below with reference to the attached drawings. Fig. 1 is a sectional view in a width direction of a typical pneumatic tire for a motorcycle (hereinafter referred to as a "tire") according to the present invention and Fig. 2 is a partial development view showing a typical tread pattern.

A tire 1 shown in Fig. 1 has a pair of bead portions 3 in which bead cores 2 are embedded, a pair of side wall portions 4 extending radially outwardly from the bead portions 3, and a tread portion 5 extending between the both side wall portions, according to customary practices. In addition, there are embedded, in the tire 1, a carcass 6 toroidaly extending between the both bead cores 3 and belt layers positioned on the outer peripheral surface of a crown portion of the carcass 6.

As shown in Fig. 2, the tread portion 5 is provided with a pair of circumferential grooves 7 extending generally in the circumferential direction of the tire and respectively positioned at each of the right and left half areas with an equatorial plane CL of the tire being as its center, and a plurality of inclined grooves 8 extending to be inclined with respect to the circumferential direction of the tire. These inclined grooves 8 run from an outer side to an inner side in the width direction on a grounding surface of the tread portion and end within the grounding surface of the tread portion, that is to say, one end portion of the inclined groove is positioned out of the grounding surface of the tread portion while the other end portion is positioned within the grounding surface of the tread portion without opening into other grooves.

When the tread portion 5 of the tire 1 is divided into a central area 9 including the equatorial plane CL of the tire and two side areas 10 located at both sides on the central area 9 and including tread grounding edges TE, the circumferential grooves 7 are disposed in the side areas 10. The inventor has repeatedly studied stability of a pneumatic tire for a motorcycle and found that a change in stiffness of the side areas 10 of the tread portion 5 has a great influence on stability when an input force to the tire is increased by breaking from the straight-running state to increase the grounding surface of the tread portion, while stiffness of the grounding surface of the tread portion is excessively reduced so as to rather decrease stability of the tire when the circumferential grooves are present in the central area 9. Based on these findings, in the tire of the present invention, the circumferential grooves 7 are disposed only in the side areas 10 to ensure high stability.

The inclined grooves 8 are consist of mutually oppositely slanting grooves with respect to the circumferential direction of the tire, e.g., grooves downwardly sloping to the right and grooves downwardly sloping to the left in the embodiment shown in Fig. 2, which are alternatively arranged along the circumferential direction of the tire. With this arrangement, lightness of handling performance is improved since the inclined grooves follow an input force from the road surface even when the motorcycle turns in either the right and left directions. In addition, at least a part of these inclined grooves 8 extend across the circumferential groove 7, over the equatorial plane CL of the tire and into the opposite half area so as to improve lightness of handling performance throughout the camber range.

From the viewpoint of ensuring stiffness of the tread portion 5, 30% or more of the inclined grooves 8 preferably extend over the equatorial plane CL of the tire. From the viewpoint of improving lightness of handling, half or more of the inclined grooves 8 preferably extend over the equatorial plane CL of the tire and in this case, it is preferable that, as shown in Fig. 2, the inclined grooves 8 extending across the equatorial plane CL of the tire and the inclined grooves 8 not extending across the equatorial plane CL of the tire are alternatively arranged as many as possible.

In addition, an especially large shearing force is applied, during breaking, to the area having a width of 10% of a width LT measured along the contour of the grounding surface of the tread portion with the equatorial plane of the tire being as its center, so that if the circumferential grooves are present in this area, stiffness of the tread portion 5 is excessively reduced to rather decrease stability of the tire. Therefore, it is preferable that the central area 9 has a width of 10% of the width LT along the contour of the grounding surface of the tread portion and the circumferential grooves 7 are disposed outside of the central area 9 in the width direction of the tire.

Although the number of the circumferential grooves can be appropriately changed depending on a size of a tire, use environment and the like, one pair or two pairs of circumferential grooves are preferred for a pneumatic tire for a motorcycle having a general size. The reason is that if more than two pairs of circumferential grooves are provided, stiffness of the tread portion is excessively reduced to rather decrease stability of the tire.

In addition, it is preferable that the circumferential grooves 7 are located in an area having a width of 30% of the width LT along the contour of the grounding surface of the tread portion with the tread grounding edge TE being as its center. That is to say, it is preferable that a transverse length RD measured between the tread grounding edge TE and the center of the groove width of the circumferential groove along the grounding surface of the tread portion 5 is not more than 15% of the width LT along the contour of the tread portion. The part where the grounding surface of the tread portion 5 is increased by braking is located within the area having a width of 15% of the width LT along the contour of the tread portion with a tread grounding edge TE being as its center. Thus, by disposing the circumferential groove 7 in this area, it is possible to moderate change of a shearing force of the tread portion and effectively obtain an effect on improvement of stability of the tire.

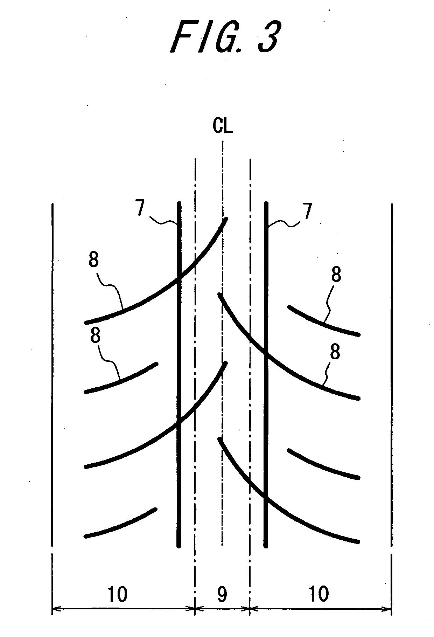

The inclined grooves 8 may have not only linear extending shapes as shown in Fig. 2, but also arched extending shapes as shown in Fig. 3. The arch-like inclined grooves are arranged to follow the direction of an input force applied to a tire when entering a corner so as to have a greater effect on suppressing uneven wear.

It is preferable that the tire 1 is a directional tire of which a rotation direction is specified when mounted on a vehicle, and the inner edge of the inclined groove 8 in the width direction of the tire enters the grounding surface of the tread portion in advance of the outer edge of the inclined groove in the width direction of the tire. That is to say, in the embodiments shown in Figs. 2 and 3, it is preferable that a rotation direction is specified so that the upper portion of the inclined groove in the figures firstly enters the grounding surface of the tread portion. In this way, the inclined grooves follow an input force from a road surface during cornering so as to improve lightness of handling performance.

The tire according to the present invention shows significant improvement of lightness of handling and stability during braking when it is mounted on a front wheel of a motorcycle. This is because, in a motorcycle, mainly a front wheel contributes to handling performance and stability.

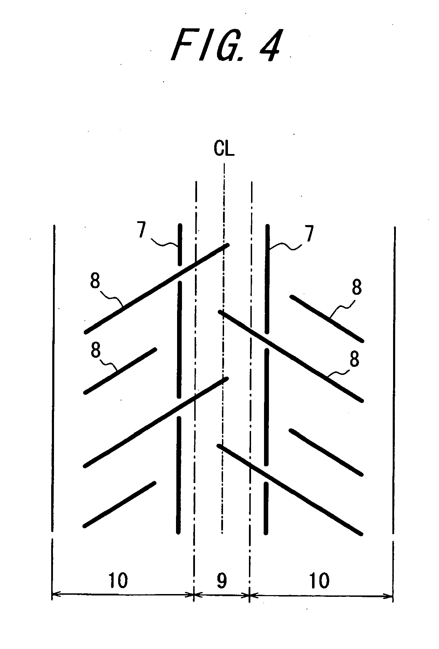

The above description shows only a part of possible embodiments of the present invention. These configurations can be mutually combined and various modifications can be made without departing from the scope of the present invention. For example, the circumferential grooves 7 may continuously extend in the circumferential direction of the tire as shown in Figs. 2 and 3 and, as an alternative, they may intermittently extend as shown in Fig. 4 as well. If the circumferential grooves 7 intermittently extend, a ground contact area of the side areas 10 is increased to improve grip performance in comparison to the case where the circumferential grooves 7 continuously extend.

### EXAMPLES

Next, a tire according to the present invention was experimentally produced and its performance evaluation will be explained below.

A tire of Example is a pneumatic tire for a motorcycle, having a tire size of 125/600R17 and a tread pattern shown in Fig. 2. In the tire, half of the inclined grooves extend across the equatorial plane of the tire.

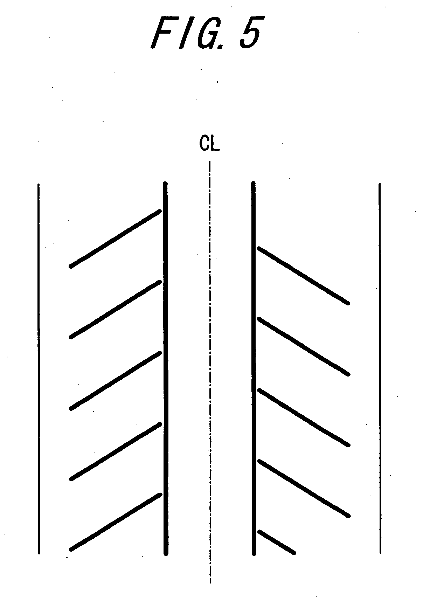

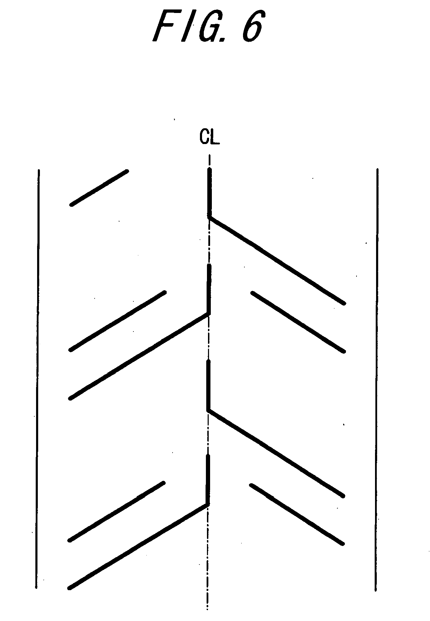

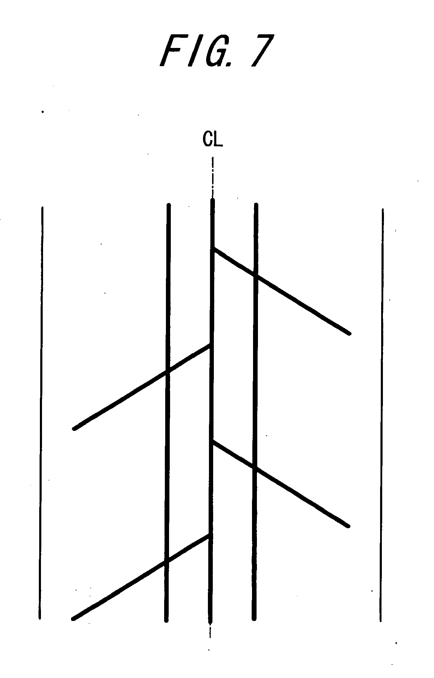

For comparison, tires having the same size as that of the tire of the Example but having tread patterns respectively shown in Fig. 5 (Conventional Example 1), Fig. 6 (Conventional Example 2) and Fig. 7 (Conventional Example 3) were also experimentally produced.

Each of the above-mentioned experimental tires was mounted on a rim with the size of MT3.50 to form a tire/rim assembly, then the assembly was equipped on a test motorcycle as a front wheel and inner pressure of 150 kPa (relative pressure) was applied. A conventional tire having a tire size of 165/625R17 was equipped on the motorcycle as a rear wheel and inner pressure of 150 kPa (relative pressure) was applied.

A professional rider drove this test motorcycle on a paved road of a racing circuit and sensory evaluated lightness of handling performance and stability. The evaluation result is shown in Table 1. In the evaluation result in Table 1, a value not less than 100 means satisfactory performance, while a value less than 100 means unsatisfactory performance. A larger value means better performance.

**Table 1**

| | | Conventional Example 1 | Conventional Example 2 | Conventional Example 3 | Example |
|---|---|---|---|---|---|
| Tread pattern | | Fig. 5 | Fig. 6 | Fig. 7 | Fig. 2 |
| Handling performance | small to medium camber range | 90 | 100 | 100 | 100 |
| | medium to large camber range | 100 | 100 | 100 | 100 |
| Stability | | 110 | 80 | 90 | 110 |

The results shown in Table 1 indicate that the tire of Conventional Example 1 shows unsatisfactory handling performance in the small to medium camber range and the tires of Conventional Examples 2 and 3 show unsatisfactory stability. In short, these conventional tires cannot satisfy both handling performance and stability at the same time. On the other hand, the tire of Example shows satisfactory handling performance both in the small to medium camber range and the medium to large chamber range, and satisfactory stability, and, therefore, are superior in overall performances..

As is apparent from the above description, the present invention made it possible to improve both of lightness of handling and stability during braking.

## Claims

1. A pneumatic tire (1) for a motorcycle having a tread portion (5) provided with at least a pair of circumferential grooves (7) extending generally in a circumferential direction of the tire and oppositely disposed with respect to an equatorial plane of the tire and a plurality of inclined grooves (8) extending from an outer side to an inner side in a width direction on a grounding surface of the tread portion to be inclined with respect to the circumferential direction of the tire and ended within the grounding surface of the tread portion, **characterized in that** said circumferential grooves (7) are disposed in the side areas (10) when the tread portion (5) is divided into a central area (9) and two side areas (10) located at both sides on the central area, and
the inclined grooves (8) slanting in mutually opposite directions with respect to the circumferential direction of the tire are alternatively arranged along the circumferential direction of the tire, at least some of which extending across the equatorial plane of the tire.

2. The pneumatic tire for a motorcycle according to claim 1, wherein at least a half of the inclined grooves extend across the equatorial plane of the tire.

3. The pneumatic tire for a motorcycle according to claim 1 or 2, wherein the central area has a width of 10% of a width along the contour of the grounding surface of the tread portion with the equatorial plane of the tire being as its center.

4. The pneumatic tire for a motorcycle according to any one of claims 1 to 3, wherein one pair or two pairs of said circumferential grooves are provided.

5. The pneumatic tire for a motorcycle according to any one of claims 1 to 4, wherein the circumferential grooves are disposed in an area having a width of 30% of a width along the contour of the grounding surface of the tread portion with a tread grounding edge being as its center.

6. The pneumatic tire for a motorcycle according to any one of claims 1 to 5, wherein said inclined grooves have linear or arched extending shapes.

7. The pneumatic tire for a motorcycle according to any one of claims 1 to 6, wherein the tire is a directional tire of which a rotation direction is specified when mounted on a vehicle, and the inner edge of the inclined groove in the width direction of the tire enters the grounding surface of the tread portion in advance of the outer edge of the inclined groove in the width direction of the tire.

8. The pneumatic tire for a motorcycle according to any one of claims 1 to 7, wherein said tire is to be mounted on a front wheel of the motorcycle.

## Patentansprüche

1. Luftreifen (1) für ein Motorrad mit einem Laufflächenabschnitt (5), der mit mindestens einem Paar Umfangsrillen (7), die sich im Allgemeinen in einer Umfangsrichtung des Reifens erstrecken und mit Bezugnahme zu einer Äquatorebene des Reifens entgegengesetzt angeordnet sind, und einer Vielzahl von schrägen Rillen (8) versehen ist, die sich von einer Außenseite zu einer Innenseite in einer Breitenrichtung auf einer Aufstandsfläche des Laufflächenabschnittes erstrecken, um mit Bezugnahme auf die Umfangsrichtung des Reifens schräg zu sein und innerhalb der Aufstandsfläche des Laufflächenabschnittes zu enden, **dadurch gekennzeichnet, dass** die Umfangsrillen (7) in den Seitenflächen (10) angeordnet sind, wenn der Laufflächenabschnitt (5) in eine mittlere Fläche (9) und zwei Seitenflächen (10) unterteilt ist, die auf beiden Seiten an der mittleren Fläche angeordnet sind; und
die schrägen Rillen (8), die sich in gegenseitig entgegengesetzten Richtungen mit Bezugnahme auf die Umfangsrichtung des Reifens neigen, abwechselnd längs der Umfangsrichtung des Reifens angeordnet sind, wobei sich mindestens einige davon über die Äquatorebene des Reifens erstrecken.

2. Luftreifen für ein Motorrad nach Anspruch 1, bei dem sich mindestens eine Hälfte der schrägen Rillen über die Äquatorebene des Reifens erstreckt.

3. Luftreifen für ein Motorrad nach Anspruch 1 oder 2, bei dem die mittlere Fläche eine Breite von 10 % einer Breite längs des Profils der Aufstandsfläche des Laufflächenabschnittes aufweist, wobei die Äquatorebene des Reifens ihre Mitte ist.

4. Luftreifen für ein Motorrad nach einem der Ansprüche 1 bis 3, bei dem ein Paar oder zwei Paar der Umfangsrillen vorhanden sind.

5. Luftreifen für ein Motorrad nach einem der Ansprüche 1 bis 4, bei dem die Umfangsrillen in einer Fläche angeordnet sind, die eine Breite von 30 % einer Breite längs des Profils der Aufstandsfläche des Laufflächenabschnittes aufweist, wobei ein Laufflächenaufstandsrand ihre Mitte ist.

6. Luftreifen für ein Motorrad nach einem der Ansprüche 1 bis 5, bei dem die schrägen Rillen lineare oder sich bogenartig erstreckende Formen aufweisen.

7. Luftreifen für ein Motorrad nach einem der Ansprüche 1 bis 6, bei dem der Reifen ein richtungsabhängiger Reifen ist, dessen Drehungsrichtung vorgeschrieben wird, wenn er auf ein Fahrzeug montiert wird, und bei dem der innere Rand der schrägen Rille in der Breitenrichtung des Reifens vor dem äußeren Rand der schrägen Rille in der Breitenrichtung des Reifens in die Aufstandsfläche des Laufflächenabschnittes gelangt.

8. Luftreifen für ein Motorrad nach einem der Ansprüche 1 bis 7, bei dem der Reifen auf ein Vorderrad des Motorrades montiert werden soll.

## Revendications

1. Bandage pneumatique (1) pour un motocycle, comportant une partie de bande de roulement (5) avec au moins une paire de rainures circonférentielles (7) s'étendant en général dans une direction circonférentielle du bandage pneumatique, et agencées de manière opposée par rapport à un plan équatorial du bandage pneumatique, et plusieurs rainures inclinées (8), s'étendant d'un côté externe vers un côté interne dans une direction de la largeur sur une surface en contact avec le sol de la partie de bande de roulement, destinées à être inclinées par rapport à la direction circonférentielle du bandage pneumatique et se terminant dans la surface en contact avec le sol de la partie de bande de roulement, **caractérisé en ce que** lesdites rainures circonférentielles (7) sont agencées dans les zones latérales (10) lorsque la partie de bande de roulement est divisée en une zone centrale (9) et deux zones latérales (10), agencées au niveau des deux côtés sur la zone centrale ; et
les rainures inclinées (8), inclinées dans des directions mutuellement opposées par rapport à la direction circonférentielle du bandage pneumatique, étant agencées par alternance le long de la direction circonférentielle du bandage pneumatique, au moins certaines d'entre elles s'étendant à travers le plan équatorial du bandage pneumatique.

2. Bandage pneumatique pour motocycle selon la revendication 1, dans lequel au moins une moitié des rainures inclinées s'étend à travers le plan équatorial du bandage pneumatique.

3. Bandage pneumatique pour motocycle selon les revendications 1 ou 2, dans lequel la zone centrale a une largeur représentant 10% d'une largeur s'étendant le long du contour de la surface en contact avec le sol de la bande de roulement, le plan équatorial du bandage pneumatique constituant son centre.

4. Bandage pneumatique pour motocycle selon l'une quelconque des revendications 1 à 3, comportant une paire ou deux paires desdites rainures circonférentielles.

5. Bandage pneumatique pour motocycle selon l'une quelconque des revendications 1 à 4, dans lequel les rainures circonférentielles sont agencées dans une zone ayant une largeur représentant 30% d'une largeur s'étendant le long du contour de la surface en contact avec le sol de la partie de bande de roulement, un bord en contact avec le sol de la bande de roulement constituant son centre.

6. Bandage pneumatique pour motocycle selon l'une quelconque des revendications 1 à 5, dans lequel lesdites rainures inclinées ont des formes à extension linéaire ou arquée.

7. Bandage pneumatique pour motocycle selon l'une quelconque des revendications 1 à 6, dans lequel le bandage pneumatique est un bandage pneumatique directionnel, dont la direction de rotation est spécifiée lors du montage sur un véhicule, le bord interne de la rainure inclinée dans la direction de la largeur du bandage pneumatique rentrant dans la surface en contact avec le sol de la partie de bande de roulement avant le bord externe de la rainure inclinée dans la direction de la largeur du bandage pneumatique.

8. Bandage pneumatique pour motocycle selon l'une quelconque des revendications 1 à 7, dans lequel ledit bandage pneumatique doit être monté sur une roue avant du motocycle.
